# EUROPEAN PATENT SPECIFICATION

(11) **EP 0 925 957 B1**
(45) Date of publication and mention of the grant of the patent: **26.02.2003**
(21) Application number: 98310509.9
(22) Date of filing: 21.12.1998
(51) Int. Cl.: B60C 11/13, B60C 11/11, B60C 11/12

(54) **Pneumatic tires**
Luftreifen
Bandages pneumatiques

(30) Priority: 25.12.1997 JP 35722697
(43) Date of publication of application: 30.06.1999
(73) Proprietor: Bridgestone Corporation, Tokyo (JP)
(72) Inventor: Aoki, Namito, Kokubunji City, Tokyo (JP)
(74) Representative: Whalley, Kevin

(56) References cited:
- EP-A- 0 233 135
- EP-A- 0 652 119
- EP-A- 0 849 101
- DE-A- 19 711 607
- PATENT ABSTRACTS OF JAPAN vol. 013, no. 153 (M-813), 13 April 1989 (1989-04-13) & JP 63 312204 A (BRIDGESTONE CORP), 20 December 1988 (1988-12-20)

## Description

This invention relates to a pneumatic tire usable as a studless tire in heavy duty vehicles such as trucks, buses and the like, and more particularly to an improvement of the tread structure in the tire, particularly an improvement of resistance to uneven wear and also performances on snow without an increase of noise.

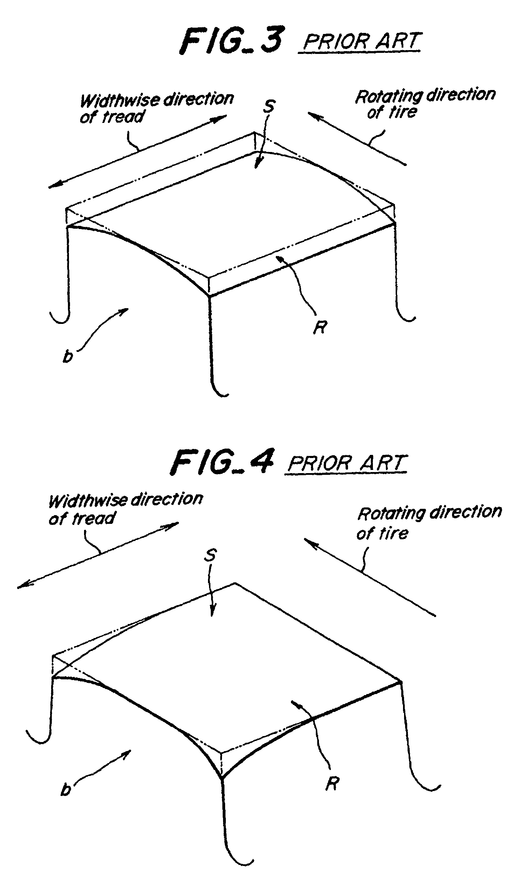

In the tire having a block pattern, there is a conventional technique that the occurrence of uneven wear called a heel-and-toe wear is controlled by increasing the wearing quantity of a block at the stepping-in side and decreasing the wearing quantity at the kicking-out side. As shown by a schematically perspective view of one block in Fig. 3 of the accompanying drawings, an outline of the block in a section perpendicular to a rotating axis of the tire is rendered into an arc shape having a radius of curvature smaller than an outer diameter in an outline of the tire, whereby the whole shape of the block b is made substantially semicylindrical so as to lower the height of the block at both the stepping-in side S and the kicking-out side R.

According to such a block, it is recognized to improve the heel-and-toe wear, but it is unavoidable to cause another problem with respect to noise, so that it is considerably degraded as compared with that of a tire not taking a countermeasure for the uneven wear. Therefore, as shown in Fig. 4 of the accompanying drawings, it is proposed to establish both the improvement of the resistance to uneven wear and the reduction of noise by largely decreasing the block height in corner portions of the block b at the stepping-in side S and the kicking-out side R located at the side in the widthwise direction of the tread.

On the other hand, in the studless tire having a block pattern, it is proposed to improve the tire performances on snow by forming a circumferential fine groove between a plurality of relatively wide-width circumferential main grooves to increase the negative ratio of the ground contact region of the tread.

In the conventional technique, however, it is not appropriate to apply the above block structure to the studies tire, so that it is not clear how to use the above block structure in any blocks formed in the studless tire in order to effectively attain not only the control of the uneven wear but also the reduction of noise together with the improvement of tire performances on snow.

Attention is also drawn to the disclosure of EP-A-0 233 135 (figure 3) showing a pneumatic tire comprising a plurality of circumferential main grooves extending in the circumferential direction of a tread, a circumferential fine groove formed between the circumferential main grooves and extending in the circumferential direction of the tread, a plurality of lateral grooves dividing land portions defined by the circumferential main grooves and the circumferential fine groove into a plurality of blocks, and sipes formed in each of the blocks and extending inclined in a widthwise direction of the tread, wherein corners of the blocks being chamfered toward the bottom of the respective grooves, so as to gradually decrease the height of the blocks toward the tip of each of the corner portions, thereby increasing the stiffness of the blocks; preferably only acute angled corner portions of blocks are chamfered.

It is an object of the present invention to provide a pneumatic tire capable of sufficiently establishing both the control of the uneven wear and the reduction of noise by applying the block structure as mentioned above to blocks in the studless tire having a block pattern, and further improving the performances of the studless tire on snow.

According to the invention, there is provided a pneumatic tire comprising a plurality of circumferential main grooves extending in the circumferential direction of a tread, a circumferential fine groove formed between the circumferential main grooves and extending in the circumferential direction of the tread, a plurality of lateral grooves dividing a land portion defined by the circumferential grooves into a plurality of blocks and at least one sipe formed in each of the blocks and extending inclined in a widthwise direction of the tread, in which, in at least one of block rows located on both sides of the circumferential fine groove, only comer portions of each block adjacent to the circumferential fine groove among all the comer portions of the blocks are chamfered to comprise flat slant faces or curved slant faces convexly protruding upward, so as to gradually decrease the height of the block toward the tip of each of the comer portions and the shape of the chamfering surface.

Thus, the height of each of the blocks located along the lateral groove is made higher at the side of the circumferential main groove and the height thereof located along the circumferential fine groove is made higher at a central portion in the circumferential direction of the tread.

In the pneumatic tire according to the invention, the chamfering surfaces are formed in the two corner portions of each block in at least one of the block rows located on both sides of the circumferential fine groove and adjacent to the circumferential fine groove, whereby the shearing strain in the circumferential direction of the block can be made uniform to advantageously control the occurrence of heel-and-toe wear, and also the contact of the block with the ground over the full surface in the widthwise direction of the block can be prevented to effectively control the occurrence of sound beating on the road surface.

On the other hand, the circumferential fine groove is arranged, preferably in a zigzag form, between the circumferential main grooves for further improving the tire performances on snow in the pneumatic tire according to the invention. In this case, when the tire is run on a fresh snow road at an initial wearing stage under loading, there is a danger of clogging the circumferential fine groove having a narrow width and a large depth with snow resulting from an application of a relatively large friction force to snow of a low specific gravity taken into the circumferential fine groove,and hence there is a danger that the tire performance on snow can not be enhanced to the extent as is expected. However, when the chamfering surface is formed on each of the blocks adjacent to the circumferential fine groove as previously mentioned, the groove width of the circumferential fine groove is substantially enlarged in the surface chamfered portion of the block, whereby the fracture strength between snow in the circumferential fine groove and the surface of the snow road can be enhanced to sufficiently smoothen the slipping of snow from the circumferential fine groove and largely improve the tire performances on snow.

Also, the surface chamfered portion of the block brings about a substantial increase of the groove volume in the circumferential fine groove, whereby the volume of snow taken in the circumferential fine groove is made larger, so that the shearing force of a so-called snow column can be more increased to further improve the traction and braking performances on snow.

On the contrary, since the circumferential main groove has naturally a sufficiently wide initial groove width, the effect as mentioned above can hardly be expected in the circumferential main groove by forming the chamfering surface on the corner portion of the block located at the side of the circumferential main groove.

In the pneumatic tire according to the invention, it is preferable that the quantity of decreasing the block height in the chamfering surface is within a range of 0.5-3.0 mm.

Namely, the tire performances on snow through the chamfering surface as mentioned above are improved as the decreasing quantity of the block height becomes large. When the decreasing quantity exceeds 3 mm or is less than 0.5 mm, the effect of controlling the occurrence of uneven wear by the chamfering surface undesirably lowers.

The invention will be further described with reference to the accompanying drawings, wherein:
Fig. 1 is a diagrammatic partial developed view of a tread pattern in an embodiment of the pneumatic tire according to the invention;
Figs. 2a and 2b are diagrammatic plan views illustrating an embodiment of forming a chamfering surface on one block according to the invention, respectively;
Fig. 3 is a schematically perspective view of an embodiment of a block in a conventional tire; and
Fig. 4 is a schematically perspective view of another embodiment of a block in a conventional tire.

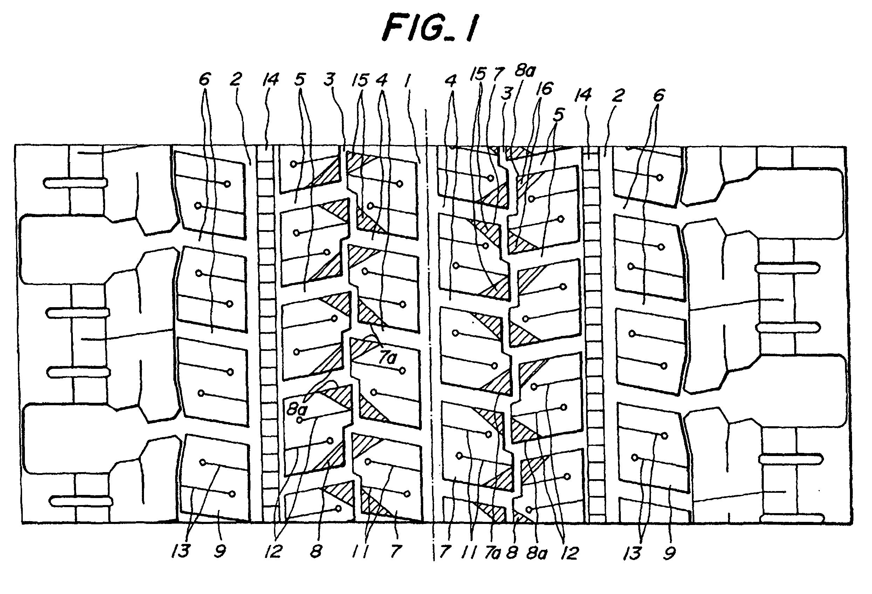

In Fig. 1 is diagrammatically shown a tread pattern in an embodiment of the pneumatic tire according to the invention. Moreover, the inner reinforcing structure of the tire is the same as that of the usual heavy duty radial tire, so that illustration thereof is omitted.

In this case, the ground contact portion of the tread is provided with three circumferential main grooves 1, 2 straightforward and continuously extending in the circumferential direction of the tread and having a groove width of, for example, more than 5 mm, in which the circumferential main groove 1 is arranged at the center of the tread and the two circumferential main grooves 2 are arranged on both shoulder portions of the tread.

Also, a circumferential fine groove 3 extending zigzag in the circumferential direction of the tread and having a groove width of, for example, less than 5 mm but not less than 2 mm is formed between the circumferential main grooves 1 and each of the circumferential main grooves 2. Furthermore, land portions defined by these circumferential main grooves 1, 2 and circumferential fine grooves 3 are divided into respective blocks 7, 8 and 9 by lateral grooves 4, 5 and 6 extending inclined in the widthwise direction of the tread and opening to the circumferential main grooves 1, 2 and circumferential fine grooves 3 respectively. Moreover, two sipes 11, 12 or 13 each extending inclined in the widthwise direction of the tread are formed in each of the blocks 7, 8, 9, in which one-side ends of the two sipes 11, 12 or 13 are mutually opened to the opposed side edges of the block and the other-side ends thereof are terminated in the block.

Numeral 14 is a step rib formed in the circumferential main groove 2 located at the side of the shoulder portion and having a level lower than a profile line of the ground contact region of the tread at cross section thereof. The step rib 14 functions to locally confine uneven wear unavoidably created in the ground contact region of the tire through slip-contact with the road surface in the ground contact region of the tread bearing a load applied to the tire without affecting the performances of the tire.

According to the tire having the above structure, excellent wet performances can be produced mainly under the action of the circumferential main grooves 1 and 2, while excellent traction and braking performances on snow can be realized by the side edges of each of the blocks 7, 8, 9 in the widthwise direction of the tread, the actions of the sipes 11, 12, 13 and further the action of the circumferential fine groove 3.

In the illustrated embodiment, chamfering surfaces 15, 16 are formed on two corner portions 7a, 8a of each of the blocks 7, in the block rows located on both sides of the circumferential fine groove 3, which are adjacent to the circumferential fine groove 3 and correspond to end portions in the circumferential direction of the tread, so as to gradually decrease each height of the blocks 7 and 8 toward a tip of the each corner portion 7a, 8a as shown by oblique lines in Fig. 1. Preferably, the quantity of decreasing the block height in the chamfering surface 15, 16 is within a range of 0.5-3.0 mm.

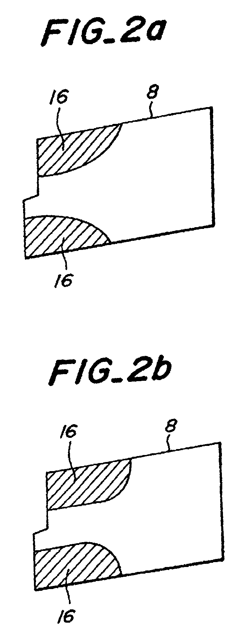

In this case, the chamfering surface 15, 16 is a flat slant face or may be a curved slant face convexly protruding upward. Also, the region forming the chamfering surface 15, 16 on each block 7, 8 can properly be selected within a range capable of effectively reducing the noise while controlling the occurrence of the uneven wear. Furthermore, the shape of the chamfering surface 15, 16 has a straight border line as shown in Fig. 1 in view of the effect of controlling the uneven wear and the effect of reducing the noise, or may have a curved border line as shown in Fig. 2a or a border line combining a straight line and a curved line as shown in Fig. 2b taking the block 8.

The following examples are given in illustration of the invention and are not intended as limitations thereof.

The invention will be described with respect to the traction performance on snow, the resistance to uneven wear and the noise as mentioned below.

The traction performance on snow is evaluated by mounting a tire having a tire size of 11R22.5 on a heavy duty vehicle having an axle type of 2D and measuring a time until a vehicle speed increases from 0 km/h to 20 km/h on a snow road at an empty state of the vehicle and represented by an index on the basis that the conventional tire is 100 as a control.

The resistance to uneven wear is evaluated by using the tire having the above tire size as a front tire in a heavy duty vehicle of 10 tons having an axle type of 2D4 and running under a load of 10 tons over a distance of 10000 km and thereafter measuring a step difference of a block due to the heel-and-toe wear and represented by an index on the basis that the conventional tire is 100.

The noise is measured by means of a microphone fixed onto a roadside when the tire having a tire size of 11R22.5 is mounted onto each wheel of a vehicle having an axle type of 2D and run on the road by inertia at 80 km/h.

The measured results are shown in Table 1. Moreover, the larger the index value, the better the traction performance on snow, while the smaller the index value, the better the resistance to uneven wear.

The conventional tire, example tires 1, 2 and 3, and the comparative tire have a tread pattern shown in Fig. 1, while the forming state of the chamfering in each of a center block 7 located adjacent to a tread center and a second block 8 located adjacent to the center block 7 toward a side of a tread end is changed as shown in Table 1.

**Table 1**

| | | Conventional tire | Example tire 1 | Example tire 2 | Example tire 3 | Comparative tire |
|---|---|---|---|---|---|---|
| Forming position of chamfering surface | center block | none | side fine groove | side fine groove | side fine groove | side main groove |
| | second block | none | side fine groove | side main groove | side fine groove | side main groove |
| Quantity of decreasing block height | | 0 mm | 2 mm | 2 mm | 5 mm | 2 mm |
| Traction performance on snow | | 100 | 115 | 110 | 118 | 100 |
| Resistance to uneven wear | | 100 | 51 | 52 | 97 | 52 |
| Noise (dB) | | 82 | 78 | 78 | 76 | 78 |

As seen from Table 1, all of the example tires can develop an excellent traction performance on snow under the action of the chamfering surface as compared with that of the conventional tire, while in the comparative tire, the chamfering surface can not effectively serve to improve the traction performance on snow.

In the example tire 3, the resistance to uneven wear is only slightly improved because the quantity of decreasing the block height in the chamfering surface is too large, while in the example tires 1 and 2 and the comparative tire, the resistance to uneven wear can largely be improved because the quantity of decreasing block height is adequate.

In all of the examples tires and the comparative tire, the reduction of noise is confirmed by the effect of changing the block height in the widthwise direction of the block.

As mentioned above, according to the invention, the chamfering surface is particularly formed in the corner portion of the block facing the circumferential fine groove, so that both the control of uneven wear and the reduction of noise as a function inherent to the chamfering surface can be realized but also the performances on snow can be further improved.

## Claims

1. A pneumatic tire comprising a plurality of circumferential main grooves (1,2) extending in the circumferential direction of a tread, a circumferential fine groove (3) formed between the circumferential main grooves and extending in the circumferential direction of the tread, a plurality of lateral grooves (4,5) dividing a land portion defined by the circumferential grooves (1,2,3) into a plurality of blocks (7,8), and at least one sipe (11,12) formed in each of the blocks (7,8) and extending inclined in a widthwise direction of the tread, in which, in at least one of block rows (7,8) located on both sides of the circumferential fine groove (3), only comer portions (7a,8a) of each block (7,8) adjacent to the circumferential fine groove (3) among all the comer portions of the blocks (7,8) are chamfered (15,16) to comprise flat slant faces or curved slant faces convexly protruding upward, so as to gradually decrease the height of the block (7,8) toward the tip of each of the comer portions (7a,8a).

2. A pneumatic tire comprising a circumferential main groove (1) arranged at the center of the tread and extending in the circumferential direction of the tread, two circumferential main grooves (2) respectively arranged on the shoulder portions of the tread and extending in the circumferential direction of the tread, and a circumferential fine groove (3) arranged between the main groove (1) arranged at the center of the tread and each of the main grooves (2) arranged on the shoulder portion of the tread and extending in the circumferential direction of the tread, a plurality of lateral grooves (4,5) dividing a land portion defined by the circumferential grooves (1,2,3) into a plurality of blocks (7,8), and at least one sipe (11,12) formed in each of the blocks (7,8) and extending inclined in a widthwise direction of the tread, in which, in at least one of block rows (7,8) located on both sides of the circumferential fine groove (3), only corner portions (7a,8a) of each block (7,8) adjacent to the circumferential fine groove (3) among all the corner portions of the block (7,8) are chamfered (15,16) to comprise flat slant faces or curved slant faces convexly protruding upward, so as to gradually decrease the height of the block (7,8) toward the tip of each of the corner portions (7a,8a).

3. A pneumatic tire as claimed in claim 1 or 2, **characterized in that** the shape of the chamfering surface (15,16) has a curved border line or a border line combining a straight line and a curved line.

4. A pneumatic tire as claimed in any of claims 1 to 3, **characterized in that** a decreasing quantity of the block height in the chamfering surface (15,16) is within a range of 0.5-3.0 mm.

5. A pneumatic tire as claimed in any of claims 1 to 4, **characterized in that** the groove width of the circumferential main grooves (1,2) is more than 5 mm, and **in that** the groove width of the circumferential fine groove (3) is less than 5 mm but not less than 2 mm.

## Patentansprüche

1. Luftreifen, aufweisend eine Vielzahl von Hauptumfangsrillen (1, 2), die sich in der Umfangsrichtung der Lauffläche erstrecken, eine schmale Umfangsrille (3), die zwischen den Hauptumfangsrillen gebildet ist und sich in der Umfangsrichtung der Lauftläche erstreckt, eine Vielzahl von seitlichen Rillen (4, 5), die einen durch die Umfangsrillen (1, 2, 3) definierten Stollenbereich in eine Vielzahl von Blöcken (7, 8) unterteilen, und mindestens einen Einschnitt (11, 12), der in jedem der Blöcke (7, 8) definiert ist und sich in der Breitenrichtung der Lauffläche geneigt erstreckt, wobei bei mindestens einer der auf den beiden Seiten der schmalen Umfangsrille (3) gelegenen Blockreihen (7, 8) nur die an die schmale Umfangsrille (3) angrenzenden Eckbereiche (7a, 8a) jedes Blocks (7, 8) unter allen Eckbereichen des Blocks (7, 8) so abgeschrägt sind (15, 16), daß sie ebene schräge Flächen aufweisen oder gekrümmte schräge Flächen, die konvex nach oben vorragen, aufweisen, so daß die Höhe des Blocks (7, 8) zu der Spitze von jedem der Eckbereiche (7a, 8a) hin allmählich abnimmt.

2. Luftreifen, aufweisend eine Hauptumfangsrille (1), die in der Mitte der Lauffläche angeordnet ist und sich in der Umfangsrichtung der Lauffläche erstreckt, zwei Hauptumfangsrillen (2), die in den Schulterbereichen der Lauffläche angeordnet sind und sich in der Umfangsrichtung der Lauffläche erstrecken, und eine schmale Umfangsrille (3), die zwischen der in der Mitte der Lauffläche gelegenen Hauptrille (1) und jeder der in dem Schulterbereich der Lauffläche gelegenen Hauptrillen (2) angeordnet ist und sich in der Umfangsrichtung der Lauffläche erstreckt, und eine Vielzahl von seitlichen Rillen (4, 5), die einen durch die Umfangsrillen (1, 2, 3) definierten Stollenbereich in eine Vielzahl von Blöcken (7, 8) unterteilen, und mindestens einen Einschnitt (11, 12), der in jedem der Blöcke (7, 8) gebildet ist und sich in der Breitenrichtung der Lauffläche geneigt erstreckt, wobei bei mindestens einer der auf den beiden Seiten der schmalen Umfangsrille (3) gelegenen Blockreihen (7, 8) nur die an die schmale Umfangsrille (3) angrenzenden Eckbereiche (7a, 8a) jedes Blocks (7, 8) unter allen Eckbereichen des Blocks (7, 8) so abgeschrägt sind (15, 16), daß sie ebene schräge Flächen aufweisen oder gekrümmte schräge Flächen, die konvex nach oben vorragen, aufweisen, so daß die Höhe des Blocks (7, 8) zu der Spitze von jedem der Eckbereiche (7a, 8a) hin allmählich abnimmt.

3. Luftreifen wie in Anspruch 1 oder 2 beansprucht, **dadurch gekennzeichnet, daß** die Form der abgeschrägten Oberfläche (15, 16) eine gekrümmte Randlinie hat, oder eine Randlinie hat, bei der eine gerade Linie mit einer gekrümmten Linie kombiniert ist.

4. Luftreifen wie in irgendeinem der Ansprüche 1 bis 3 beansprucht, **dadurch gekennzeichnet, daß** die abnehmende Blockhöhe bei der abgeschrägten Oberfläche (15, 16) innerhalb des Bereichs von 0,5-3,0 mm liegt.

5. Luftreifen wie in irgendeinem der Ansprüche 1 bis 4 beansprucht, **dadurch gekennzeichnet, daß** die Rillenbreite der Hauptumfangsrillen (1, 2) größer als 5 mm ist, und daß die Rillenbreite der schmalen Umfangsrille (3) kleiner als 5 mm, aber nicht kleiner als 2 mm ist.

## Revendications

1. Bandage pneumatique comprenant plusieurs rainures circonférentielles principales (1, 2) s'étendant dans la direction circonférentielle d'une bande de roulement, une fine rainure circonférentielle (3) formée entre les rainures circonférentielles principales et s'étendant dans la direction circonférentielle de la bande de roulement, plusieurs rainures latérales (4, 5) divisant une partie d'appui définie par les rainures circonférentielles (1, 2, 3) en plusieurs pavés (7, 8) et au moins une lamelle (11, 12) formée dans chacun des pavés (7, 8) et s'étendant en s'inclinant dans une direction de la largeur de la bande de roulement, dans lequel, dans au moins une des rangées de pavés (7, 8) agencées sur les deux côtés de la fine rainure circonférentielle (3), seules les parties de coin (7a, 8a) de chaque pavé (7, 8) adjacent à la fine rainure circonférentielle (3) parmi toutes les parties de coin des pavés (7, 8) étant chanfreinées (15, 16), de sorte à comprendre des faces inclinées plates ou des faces inclinées courbées débordant de manière convexe vers le haut, de sorte à réduire progressivement la hauteur du pavé (7, 8) en direction de la pointe de chacune des parties de coin (7a, 8a).

2. Bandage pneumatique comprenant une rainure circonférentielle principale (1) agencée au niveau du centre de la bande de roulement et s'étendant dans la direction circonférentielle de la bande de roulement, deux rainures circonférentielles principales (2) agencées respectivement sur les parties d'épaulement de la bande de roulement et s'étendant dans la direction circonférentielle de la bande de roulement, et une fine rainure circonférentielle (3) agencée entre la rainure principale (1) située au centre de la bande de roulement et chacune des rainures principales (2) agencées sur la partie d'épaulement de la bande de roulement et s'étendant dans la direction circonférentielle de la bande de roulement, plusieurs rainures latérales (4, 5) divisant une partie d'appui définie par les rainures circonférentielles (1, 2, 3) en plusieurs pavés (7, 8), et au moins une lamelle (11, 12) formée dans chacun des pavés (7, 8) et s'étendant en s'inclinant dans une direction de la largeur de la bande de roulement, dans lequel, dans au moins une des rangées de pavés (7, 8) agencées sur les deux côtés de la fine rainure circonférentielle (3), seules les parties de coin (7a, 8a) de chaque pavé (7, 8)adjacent à la fine rainure circonférentielle (3) parmi toutes les parties de coin des pavés (7, 8) étant chanfreinées (15, 16), de sorte à comprendre des faces inclinées plates ou des faces inclinées courbées débordant de manière convexe vers le haut, de sorte à réduire progressivement la hauteur du pavé (7, 8) en direction de la pointe de chacune des parties de coin (7a, 8a).

3. Bandage pneumatique selon les revendications 1 ou 2, **caractérisé en ce que** la forme de la surface chanfreinée (15, 16) comporte une ligne de délimitation courbée ou une ligne de délimitation combinant une ligne droite et une ligne courbée.

4. Bandage pneumatique selon l'une quelconque des revendications 1 à 3, **caractérisé en ce qu'**une dimension de réduction de la hauteur du pavé dans la surface chanfreinée (15, 16) est comprise dans un intervalle allant de 0,5 à 0,3 mm.

5. Bandage pneumatique selon l'une quelconque des revendications 1 à 4, **caractérisé en ce que** la largeur de rainure des rainures circonférentielles principales (1, 2) est supérieure à 5 mm, la largeur de rainure de la fine rainure circonférentielle (3) étant inférieure à 5 mm mais non inférieure à 2 mm.
